# EUROPÄISCHE PATENTSCHRIFT

(11) **EP 2 462 278 B1**
(45) Veröffentlichungstag und Bekanntmachung des Hinweises auf die Patenterteilung: **01.04.2020**
(21) Anmeldenummer: 10741912.9
(22) Anmeldetag: 27.07.2010
(51) Int. Cl.: D21C 9/08, D21H 21/02, C08L 33/12, C08L 25/08, C08L 33/02, C08L 25/06, D21C 5/02

(54) **VERFAHREN ZUR VERRINGERUNG NEGATIVER AUSWIRKUNGEN KLEBRIGER VERUNREINIGUNGEN IN ALTPAPIERHALTIGEN STOFFSYSTEMEN**
METHOD FOR REDUCING NEGATIVE EFFECTS OF ADHESIVE CONTAMINANTS IN SYSTEMS OF SUBSTANCES COMPRISING WASTE PAPER
PROCÉDÉ DE RÉDUCTION D'IMPURETÉS POISSEUSES À EFFETS NÉGATIFS DANS DES SYSTÈMES DE MATÉRIAUX CONTENANT DES VIEUX PAPIERS

(30) Priorität: 03.08.2009 DE 102009035884
(43) Veröffentlichungstag der Anmeldung: 13.06.2012
(73) Patentinhaber: Archroma IP GmbH, 4153 Reinach (CH)
(72) Erfinder: KOHLER, Achim, 74081 Heilbronn (DE); COWMAN, John, Heaton Bradford BD9 5PW West Yorkshire (GB); CORPET, Damien, F-71380 Oslon (FR); LEONE-KAMMLER, Antonella, CH-4142 Münchenstein (CH)
(74) Vertreter: Ricker, Mathias
(86) Internationale Anmeldenummer: PCT/EP2010/004573
(87) Internationale Veröffentlichungsnummer: WO 2011/015297

(56) Entgegenhaltungen:
- EP-A1- 0 114 478
- WO-A1-96/16224
- WO-A1-2009/043971
- US-A- 3 992 249
- US-A- 6 111 009
- US-A1- 2002 148 576
- US-A1- 2006 124 266

## Beschreibung

Die Erfindung betrifft ein Verfahren zur Verringerung der negativen Auswirkungen klebriger Verunreinigungen (Stickies) bei der Verarbeitung von Altpapier und gestrichenem Ausschuss bei der Herstellung von Papieren.

Es ist Stand der Technik, Papierabfälle aus natürlichen Faserstoffen einer wirtschaftlich sinnvollen Wiederverwendung zurückzuführen. Der Papierherstellungsprozess unter Verwendung von Altpapier wird zunehmend von klebenden Verunreinigungen erschwert. Durch den verstärkten Eintrag von gemischtem Altpapier als Rohstoffquelle bei der Papierherstellung werden grosse Mengen an festen oder wasserlöslichen, klebenden Bestandteilen in die Papiermaschinenkreisläufe eingetragen. Kleber aus Selbstklebeetiketten, Hotmelts, klebende Strichbestandteile recycelter gestrichener Papiere und Kartons usw. werden, trotz immer größeren mechanischen Reinigungsaufwands, nicht vollständig aussortiert.

Sie stellen eine wesentliche Ursache für sogenannte "Stickies" und "White Pitch" dar, die sich aufgrund ihrer hydrophoben Eigenschaften häufig an heissen und bewegten Teilen und in den Sieben und Filzen von Papiermaschinen ablagern und damit zu Papierbahnabrissen führen können.

Unter "Stickies" versteht man klebrige Ablagerungen in Form organischer Komplexe, die sich durch Agglomeration von miteinander wechselwirkenden Störstoffen aus dem Altpapier bilden. Alle klebrigen Ablagerungen, die ausschliesslich über die Rohstoffe eingeführt werden, bezeichnet man als "primäre Stickies". Wird dagegen die Bildung der klebrigen Verunreinigungen erst durch eine Reaktion mit Additiven, in der Regel mit kationischen Produktionshilfsmitteln wie beispielsweise Al-Salze, Störstoffbeseitiger, Polyacrylamide , Nassfestmittel, oder auch kationische Stärke, hervorgerufen, so werden diese Ablagerungen als "sekundäre Stickies" bezeichnet. Als Hauptquelle für klebende Verunreinigungen gelten die Klebstoffe aus der Papierverarbeitung, aber auch synthetische Bindemittel aus der Papierveredelung.

Um eine effektive Behandlung von klebrigen Verunreinigungen zu gewährleisten, ist die Grössenverteilung der klebrigen Verunreinigungen entscheidend für die anzuwendenden thermischen, chemischen und/oder mechanischen Verfahren.

Es wird grob zwischen "Makrostickies", das sind grobe klebrige Bestandteile mit Teilchengrössen über 150 Mikrometer, die mittels genannter Trennverfahren weitgehend aus dem Stoffkreislauf entfernt werden können, und "Mikrostickies", also feine klebrige Bestandteile zwischen 1 Mikrometer und 150 Mikrometer, unterschieden.

Seit Jahren werden bereits Produkte als Passivierungsmitteln zur Behandlung klebender Verunreinigungen wie Stickies angeboten. Diese gelösten Produkte sollen die Oberfläche der klebrigen Verunreinigungen hydrophiler machen und dadurch benetzbarer halten, wodurch die Affinität zu hydrophoben Oberflächen reduziert wird. Hydrophobe Oberflächen haben beispielsweise Siebe, Filze und Walzen, eine Hydrophobierung wird durch Belegung, z. B. durch Leimungsmittel oder Entschäumer, weiter verstärkt, wodurch die Anlagerung von Stickies weiter begünstigt wird.

WO 96/16224 A1 offenbart ein Verfahren zur Verringerung der negativen Auswirkungen klebriger Verunreinigungen, wie z.B. Stickies, bei der Verarbeitung von Altpapier, wobei eine Polymeremulsion enthaltend Polymerpartikel, die aus einer Monomermischung hergestellt sind, wobei die Monomermischung ein hydrophobes Monomer, ein hydrophiles Monomer ein nicht ionisierbares hydrophiles Monomer und einen Vernetzer aufweisen kann.

US 3,992,249 offenbart die Verringerung der Ablagerung von klebrigen Partikeln auf Papierherstellungsanlagen.

WO 2009/043971 A1 offenbart eine Methode zur Kontrolle von Ablagerungen auf Papierherstellungsmaschinen.

In manchen Fällen verursachen Mikrostickies keine Probleme bei der Papierherstellung, wenn sie nicht agglomerieren.
Um eine Reagglomeration der Mikrostickies weitgehend zu verhindern, sind verschiedene Verfahren zur chemischen Modifizierung der im Stoffstrom verbliebenen Stickies und deren Absorption an Trägermaterialien hoher spezifischer Oberfläche sowie am Faserstoff bekannt.

Dabei haben sich nachfolgende Vorgehensweisen in der Praxis bewährt, die jedoch nur zu Teileifolgen führen.
Zum einen kann eine Dispergierung mit dem Ziel der Änderung der Ladung der Stickies durch anionische und nicht-ionische Dispergiermittel erfolgen. Dadurch werden kolloidale, anionisch geladene oder nicht-ionische Teilchen gebildet, die einer Agglomeration und Ablagerung entgegenwirken. Die Benetzungseigenschaften des Dispergiermittels sind dabei sehr wichtig, da die "Stickies" in der Regel hydrophob sind.

Zum andern kann die Klebrigkeit der Stickies reduziert werden:
- Fixierung der stark anionischen Störstoffe mittels stark kationischer Fixiermittel (Bildung sogenannter Polyelektrolytkomplexe; das Reaktionsprodukt zieht dann auf die anionische Faser auf).
- Absorption an Pigmenten hoher spezifischer Oberfläche (z. B. Talkum, modifiziertes Clay, Glimmer, Smektit, Bentonit), oft mit nachfolgender Flockung mittels Polymeren zur Bindung separierbarer Makroflocken.
- Umhüllung (Maskierung) mit nicht-ionogenen hydrophilen Polymeren (Polyvinylalkohol) oder Zirkoniumverbindungen, insbesondere von Zirkoniumacetat und Ammonium-Zirkoniumcarbonat.

Als stark kationische Fixiermittel sind Polyethylenimin (PEI), Polydiallyldimethyl-ammoniumchlorid (Poly-DADMAC), Polyvinylamin (PVAm), Polyaluminiumchlorid (PAC), Polyacrylamid (PAAM), Polyamin u.a.m. bekannt. Der Aktionsbereich von Fixiermitteln erstreckt sich je nach Art und Modifikation der eingesetzten Chemikalie von ca. 1 nm bis 50 Mikrometer Partikelgrösse der Mikrostickies.

Materialien mit niedriger Oberflächenenergie (Siebe, Filze, Walzenoberflächen) zeigen ein hydrophoberes Verhalten und besitzen damit eine hohe Affinität zu hydrophoben Stoffen, wie Stickies wodurch es zur Verschmutzung der Siebe und somit zu Fehlstellen bzw. zu Verringerung der Entwässerungsleistung von Filzen kommt.
Als Adsorptionsmittel werden vor allem verschiedene Talkumtypen spezieller Oberflächenmodifikation und Korngrössenverteilung eingesetzt, die aufgrund ihrer hydrophoben und organophilen Oberfläche in der Lage sind, klebende Bestandteile anzulagern und mit dem Papier auszutragen. Derart verkapselte Kleberteilchen neigen weniger zur Ablagerung an heissen Maschinenteilen. Die Bekämpfung klebriger Ablagerungen mittels Talkum hat jedoch einige Nachteile. So ist das System sehr scherempfindlich. Talkum ist ausserdem schlecht retendierbar und führt häufig zum Verlegen der Filze.

Talkum kann die Harzleimung negativ beeinflussen und stabilisiert Schaum. Die beiden anorganischen Produkte Talkum und Bentonit müssen aufwändig dispergiert werden.

Auch Proteinlösungen kommen als Maskierungsmittel von klebrigen Verunreinigungen zum Einsatz.

Die Stickies führen zu Ablagerungen an Maschinenteilen, Sieben, Bespannungen, Trockenzylindern und in der Folge zu Flecken, Löchern, Bahnverklebungen und in deren Folge zu Abrissen in Nass- und Trockenpartie bei Auf- und Umrollung oder beim Verdrucken.

Es bestand nach wie vor ein Verbesserungsbedarf bei der Reduktion der Klebrigkeit von Stickies.

Überraschenderweise kann durch den Einsatz einer speziellen Polymerdispersion die Klebrigkeit von Stickies erheblich reduziert werden.

Gegenstand der Erfindung ist eine wässrige Polymerdispersion und deren Einsatz in einem zur Verfahren zur Verringerung klebriger Verunreinigungen bei der Aufbereitung von altpapierhaltigen Stoffsystemen dadurch gekennzeichnet, dass man bei der der Verarbeitung von Altpapier eine wässrige Polymerdispersion enthaltend eine Komponente A und eine Komponente B zur Koagulierung und Entklebung der Stickies zugibt, wobei Komponente A ein Homopolymer der folgenden Gruppe von
Acrylsäure oder deren Alkylestern, insbesondere deren Methyl-, Ethyl-, Butyl, Isobutyl-, propyl-, Octyl-, Decyl-, 2-Ethylhexylester;
oder Methacrylsäure oder deren Alkylestern, insbesondere deren Methyl-, Ethyl-, Butyl-, Isobutyl-, propyl-, Octyl-, Decyl-, 2-Ethylhexylester;
Styrol oder Methylstyrol;
Vinylacetat;
Itaconsäure;
Glycidylmethacrylat;
2-Hydroxy-alkyl-(meth)acrylat;
Methacrylamid;
N-hydroxy-ethyl-(meth)acrylamid
Dimethacrylat Monomere, wie z.B. 1,3
Butylenglycol-dimethacrylat, Ethylenglycol-dimethacrylat, Di-ethylenglycol-dimethacrylat, Propylenglycol-dimethacrylat, Di-propylenglycol-dimethacrylat, 4-Methyl-1,4-pentandiol-dimethacrylat;
Divinylbenzol oder Trivinylbenzol und/oder ein Copolymer von der Gruppe der oben genannten Monomere ist,
und Komponente B ein Styrolcopolymer mit Acrylsäure, Maleinimid und/oder Maleinsäureanhydrid ist.

Bei Komponente A handelt es sich um ein hydrophobes Homo- und/oder
Copolymer von den oben genannten Monomeren mit einer möglichst hohen Glasübergangs- oder Erweichungstemperatur (Tg), bevorzugt um
Methylmethacrylat. Die Glasübergangstemperatur von A liegt vorzugsweise über 40°C, insbesondere über 80°C, besonders bevorzugt über 100°C.

Komponente B ist ein Styrolcopolymer mit (Meth)acrylsäure, Maleimid und/oder Maleinsäureanhydrid. Vorzugsweise ist Komponente B ein Copolymer aus Styrol
und Acrylsäure. Vorzugsweise hat Komponente B ein Molekulargewicht zwischen 3.000g/mol und 15.000 g/mol, insbesondere 3.000 und 7.000 g/mol.

Insbesondere bevorzugt ist eine wässrige Dispersion mit Partikelgrößen kleiner 150 nm, bevorzugt kleiner 120 nm.

Optional kann die wässrige Polymerdispersion noch eine Komponente C, ein kationisches Fixiermittel, enthalten, das die Koagulation der Stickies unterstützt. Vorzugsweise wird die Komponente C ausgewählt aus der Gruppe: Polyethylenimin (PEI), Polydiallyldimethyl-ammoniumchlorid (Poly-DADMAC), Polyvinylamin (PVAm), Polyaluminiumchlorid (PAC), Polyacrylamid (PAAM) und Polyamin.

Zur Steigerung der Effizienz der erfindungsgemäßen Polymerdispersion und deren Stabilität ist es ferner möglich eine weitere Komponente D optional in Form eines Tensids zu zusetzen.

Zusätzlich zu den Komponenten A, B, C und/oder D enthält die Polymerdispersion Wasser (Komponente E).
In einer bevorzugten Ausführungsform enthält die wässrige Dispersion
2 bis 50%, vorzugsweise 5 bis 30% Komponente A,
2 bis 30%, vorzugsweise 5 bis 25% Komponente B
0 bis 2% Komponente C;
0 bis 0,3%, vorzugsweise 0 bis 0,2% Komponente D und
96 bis 17.7%, vorzugsweise 90 bis 45 % Wasser (Komponente E).

Alle Prozentangaben beziehen sich hierbei auf Gew.%
Die wässrige Dispersion stellt in Anwesenheit von Ca²⁺ eine selbstkoagulierende Nanodispersion dar. Die erfindungsgemäße Polymerdispersion lagert sich an die hydrophoben Stickiepartikel an, wodurch diese in die ausfallende Polymerdispersion eingelagert und so entklebt werden.

Überraschender Weise hat sich gezeigt, dass bei Einsatz der erfindungsgemäßen Polymerdispersion der Stickieaustrag beim Flotationsprozess erheblich verbessert wird. Vorzugsweise wird die Polymerdispersion vor dem Deinkingprozess zugegeben. In diesem Fall ist eine zweite Dosierstelle im fertigen DIP (Deinkingpulp nach erfolgter mechanischer Aufbereitung und gegebenenfalls Trennung grober klebriger Bestandteile) sinnvoll. Die Einsatzmengen liegen zwischen 0,5 - 2 kg/t Handelsware. Bei der Herstellung kritischer gestrichener oder imprägnierter Spezialpapiere ist eine Zugabe der erfindungsgemäßen Polymerdispersion direkt in den gestrichenen Ausschuss zu empfehlen. Weiterer Vorteil dieser erfindungsgemäßen Polymerdispersion ist, dass bei der Zellstoffherstellung auf diese Weise auf anorganische Adsorptionsmittel, wie Talkum, Bentonit, kationisierte Füllstoffe usw., verzichtet werden kann.

Da bei dem Einsatz der beschriebenen Polymerdispersion keine zusätzlichen kationischen Komponenten zur Koagulation der Mikrostickies eingesetzt werden müssen, sondern diese bereits bei normalen Wasserhärten von selbst koaguliert, und so die klebrigen Stickies umschliesst, zeichnet sich das erfindungsgemäße Verfahren im Vergleich zu den im Stand der Technik bekannten Verfahren durch eine hohe Ökonomie und Ökologie aus.

### Beispiele:

### Beispiel 1 (Version mit Methylmethacrylat)

Ein 2 I-Reaktor mit Rührer und Rückflusskühler wurde mit 739,5 g entionisiertem Wasser und 419,3 g 25 %iger Lösung von Styrol-Acrylsäure-Copolymer beschickt, wonach diese Vorlage unter Rühren unter Stickstoffatmosphäre auf 85 °C erhitzt wurde.
Zulaufstrom I:
   384,8 g Methylmethacrylat
Zulaufstrom II:
   1,9 g Ammoniumperoxodisulfat
   136,3 g entionisiertes Wasser

Nach Erreichen einer Innentemperatur von 85 °C wurden der Zulaufstrom I und der Zulaufstrom II über zwei getrennte Zuläufe gleichzeitig beginnend über einen Zeitraum von 3 h 30 kontinuierlich in die Polymerisationscharge eindosiert, wobei gerührt und die Reaktionstemperatur beibehalten wurde. Die Pumpen wurden mit 318,2 g entionisiertem Wasser gespült. Nach dem Ende beider Zulaufströme wurde noch 25 Minuten bei der Reaktionstemperatur nachreagieren gelassen.

Danach wurde die Reaktionsmischung auf Raumtemperatur abgekühlt und über ein Filter mit einer Maschengröße von 160 µm filtriert.

Die Charakterisierung des erhaltenen Copolymers hinsichtlich Feststoffgehalt (FG) und durchschnittlicher Teilchengröße (D) ist nachstehend angegeben:
FG = 24,1 %
D = 53 nm

### Beispiel 2 (Version mit Methylmethacrylat +Vernetzer)

Ein 2 I-Reaktor mit Rührer und Rückflusskühler wurde mit 739,5 g entionisiertem Wasser und 419,3 g 25 %iger Lösung von Styrol-Acrylsäure-Copolymer beschickt, wonach diese Vorlage unter Rühren unter Stickstoffatmosphäre auf 85 °C erhitzt wurde.
Zulaufstrom I:
   370,9 g Methylmethacrylat
   19,5 g Glycidylmethacrylat
Zulaufstrom II:
   1,9 g Ammoniumperoxodisulfat
   136,3 g entionisiertes Wasser

Nach Erreichen einer Innentemperatur von 85 °C wurden der Zulaufstrom I und der Zulaufstrom II über zwei getrennte Zuläufe gleichzeitig beginnend über einen Zeitraum von 3 h 30 kontinuierlich in die Polymerisationscharge eindosiert, wobei gerührt und die Reaktionstemperatur beibehalten wurde. Die Pumpen wurden mit 318,2 g entionisiertem Wasser gespült. Nach dem Ende beider Zulaufströme wurde noch 25 Minuten bei der Reaktionstemperatur nachreagieren gelassen. Danach wurde die Reaktionsmischung auf Raumtemperatur abgekühlt und über ein Filter mit einer Maschengröße von 160 µm filtriert.

Die Charakterisierung des erhaltenen Copolymers hinsichtlich Feststoffgehalt (FG) und durchschnittlicher Teilchengröße (D) ist nachstehend angegeben:
FG = 24,9 %
D = 40 nm

### Beispiel 3 (Version mit Methylmethacrylat + zweitem Vernetzer)

Ein 2-L-Reaktor mit Rührer und Rückflußkühler wurde mit 740 g entionisiertem Wasser und 419 g 25%iger Lösung von Styrol-Acrylsäure-Copolymer beschickt, wonach diese Vorlage unter Rühren unter Stickstoffatmosphäre auf 85°C erhitzt wurde.
Zulaufstrom I:
   370 g Methylmethacrylat
   19 g Ethylenglykoldimethacrylat
Zulaufstrom II:
   2 g Ammoniumperoxodisulfat
   136 g entionisiertes Wasser

Nach Erreichen einer Innentemperatur von 85°C wurden der Zulaufstrom I und der Zulaufstrom II über zwei getrennte Zuläufe gleichzeitig beginnend über einen Zeitraum von 3 h 30 kontinuierlich in die Polymerisationscharge eindosiert, wobei gerührt und die Reaktionstemperatur beibehalten wurde. Die Pumpen wurden mit 318 g entionisiertem Wasser gespült. Nach dem Ende beider Zulaufströme wurde noch 25 Minuten bei der Reaktionstemperatur nachreagieren gelassen. Danach wurde die Reaktionsmischung auf Raumtemperatur abgekühlt und über ein Filter mit einer Maschengröße von 160 µm filtriert.

Die Charakterisierung des erhaltenen Copolymers hinsichtlich Feststoffgehalt (FG) und durchschnittlicher Teilchengröße (D) ist nachstehend angegeben:
FG = 25%
D = 40 nm

### Beispiel 4 (Version mit Styrol)

Ein 2-L-Reaktor mit Rührer und Rückflußkühler wurde mit 739,5 g entionisiertem Wasser und 419,3 g 25%iger Lösung von Styrol-Acrylsäure-Copolymer beschickt, wonach diese Vorlage unter Rühren unter Stickstoffatmosphäre auf 85°C erhitzt wurde.
Zulaufstrom I:
   384,8 g Styrol
Zulaufstrom II:
   1,9 g Ammoniumperoxodisulfat
   136,3 g entionisiertes Wasser

Nach Erreichen einer Innentemperatur von 85°C wurden der Zulaufstrom I und der Zulaufstrom II über zwei getrennte Zuläufe gleichzeitig beginnend über einen Zeitraum von 3 h 30 kontinuierlich in die Polymerisationscharge eindosiert, wobei gerührt und die Reaktionstemperatur beibehalten wurde. Die Pumpen wurden mit 318,2 g entionisiertem Wasser gespült. Nach dem Ende beider Zulaufströme wurde noch 25 Minuten bei der Reaktionstemperatur nachreagieren gelassen. Danach wurde die Reaktionsmischung auf Raumtemperatur abgekühlt und über ein Filter mit einer Maschengröße von 160 µm filtriert.

Die Charakterisierung des erhaltenen Copolymers hinsichtlich Feststoffgehalt (FG) und durchschnittlicher Teilchengröße (D) ist nachstehend angegeben:
FG = 24,5%
D = 61 nm

### Beispiel 5 (Version mit Kolloid + Tensid)

Ein 2-L-Reaktor mit Rührer und Rückflußkühler wurde mit 1111 g entionisiertem Wasser, 310 g 25%iger Lösung von Styrol-Acrylsäure-Copolymer und 3 Gramm Laurylsulfat beschickt, wonach diese Vorlage unter Rühren unter Stickstoffatmosphäre auf 85°C erhitzt wurde.
Zulaufstrom I:
   387 g Methylmethacrylat
Zulaufstrom II:
   2 g Ammoniumperoxodisulfat
   88 g entionisiertes Wasser

Nach Erreichen einer Innentemperatur von 85°C wurden der Zulaufstrom I und der Zulaufstrom II über zwei getrennte Zuläufe gleichzeitig beginnend über einen Zeitraum von 3 h 30 kontinuierlich in die Polymerisationscharge eindosiert, wobei gerührt und die Reaktionstemperatur beibehalten wurde. Die Pumpen wurden mit 80 g entionisiertem Wasser gespült. Nach dem Ende beider Zulaufströme wurde noch 25 Minuten bei der Reaktionstemperatur nachreagieren gelassen. Danach wurde die Reaktionsmischung auf Raumtemperatur abgekühlt und über ein Filter mit einer Maschengröße von 160 µm filtriert.

Die Charakterisierung des erhaltenen Copolymers hinsichtlich Feststoffgehalt (FG) und durchschnittlicher Teilchengröße (D) ist nachstehend angegeben:
FG = 24%
D = 50 nm

### Beispiel 6 (Styrol-Methylacrylat Copolymer)

Ein 2-L-Reaktor mit Rührer und Rückflußkühler wurde mit 739,5 g entionisiertem Wasser und 420 g 25%iger Lösung von Styrol-Acrylsäure-Copolymer beschickt, wonach diese Vorlage unter Rühren unter Stickstoffatmosphäre auf 85°C erhitzt wurde.
Zulaufstrom I:
   193 g Styrol
   193 g Methyl Methacrylat
Zulaufstrom II:
   2 g Ammoniumperoxodisulfat
   136 g entionisiertes Wasser

Nach Erreichen einer Innentemperatur von 85°C wurden der Zulaufstrom I und der Zulaufstrom II über zwei getrennte Zuläufe gleichzeitig beginnend über einen Zeitraum von 3 h 30 kontinuierlich in die Polymerisationscharge eindosiert, wobei gerührt und die Reaktionstemperatur beibehalten wurde. Die Pumpen wurden mit 318,2 g entionisiertem Wasser gespült. Nach dem Ende beider Zulaufströme wurde noch 25 Minuten bei der Reaktionstemperatur nachreagieren gelassen. Danach wurde die Reaktionsmischung auf Raumtemperatur abgekühlt und über ein Filter mit einer Maschengröße von 160 µm filtriert.

Die Charakterisierung des erhaltenen Copolymers hinsichtlich Feststoffgehalt (FG) und durchschnittlicher Teilchengröße (D) ist nachstehend angegeben:
FG = 30,0 %
D = 70 nm

### Beispiel 7 (Styrol- Maleinsäureanhydrid als Komponente B)

Ein 2-L-Reaktor mit Rührer und Rückflußkühler wurde mit 400 g entionisiertem Wasser und 750 g 14%iger Lösung von Styrol-Maleinsäureanhydrid-Copolymer beschickt, wonach diese Vorlage unter Rühren unter Stickstoffatmosphäre auf 85°C erhitzt wurde.
Zulaufstrom I:
   390 g Methyl Methacrylat
Zulaufstrom II:
   2 g Ammoniumperoxodisulfat
   130 g entionisiertes Wasser

Nach Erreichen einer Innentemperatur von 85°C wurden der Zulaufstrom I und der Zulaufstrom II über zwei getrennte Zuläufe gleichzeitig beginnend über einen Zeitraum von 3 h 30 kontinuierlich in die Polymerisationscharge eindosiert, wobei gerührt und die Reaktionstemperatur beibehalten wurde. Die Pumpen wurden mit 318,2 g entionisiertem Wasser gespült. Danach wurde die Reaktionsmischung auf Raumtemperatur abgekühlt und über ein Filter mit einer Maschengröße von 160 µm filtriert.

Die Charakterisierung des erhaltenen Copolymers hinsichtlich Feststoffgehalt (FG) und durchschnittlicher Teilchengröße (D) ist nachstehend angegeben:
FG = 29,6 %
D = 70 nm

### Beispiel 8 (hoher Kolloidanteil)

Ein 2-L-Reaktor mit Rührer und Rückflußkühler wurde mit 21,1 g entionisiertem Wasser, 750 g 25%iger Lösung von Styrol-Acrylsäure-Copolymer beschickt, wonach diese Vorlage unter Rühren unter Stickstoffatmosphäre auf 85°C erhitzt wurde.
Zulaufstrom I:
   390 g Methylmethacrylat
Zulaufstrom II:
   2 g Ammoniumperoxodisulfat
   130 g entionisiertes Wasser

Nach Erreichen einer Innentemperatur von 85°C wurden der Zulaufstrom I und der Zulaufstrom II über zwei getrennte Zuläufe gleichzeitig beginnend über einen Zeitraum von 3 h 30 kontinuierlich in die Polymerisationscharge eindosiert, wobei gerührt und die Reaktionstemperatur beibehalten wurde. Die Pumpen wurden mit 80 g entionisiertem Wasser gespült. Nach dem Ende beider Zulaufströme wurde noch 25 Minuten bei der Reaktionstemperatur nachreagieren gelassen. Danach wurde die Reaktionsmischung auf Raumtemperatur abgekühlt und über ein Filter mit einer Maschengröße von 160 µm filtriert.

Die Charakterisierung des erhaltenen Copolymers hinsichtlich Feststoffgehalt (FG) und durchschnittlicher Teilchengröße (D) ist nachstehend angegeben:
FG = 44%
D = 80 nm

### Beispiel 9 (Styrol-Acrylsäure-Copolymer mit Tg von ca. 30°C)

Ein 2-L-Reaktor mit Rührer und Rückflußkühler wurde mit 433 g entionisiertem Wasser, und 3 Gramm Laurylsulfat (30%ige Lösung) beschickt, wonach diese Vorlage unter Rühren unter Stickstoffatmosphäre auf 80°C erhitzt wurde.
Zulaufstrom I:
   5 g Ammoniumperoxodisulfat
   62 g entionisiertes Wasser
Zulaufstrom II:
   400 g Styrol,
   260 g Butylacrylat,
   10 g Methacrylsäure,
   11g tensidische Lösung (Laurylsulfat 30 %),
   384 g entionisiertes Wasser

Nach Erreichen einer Innentemperatur von 80°C wurden der Zulaufstrom I und der Zulaufstrom II über zwei getrennte Zuläufe gleichzeitig beginnend über einen Zeitraum von 4 h kontinuierlich in die Polymerisationscharge eindosiert, wobei gerührt und die Reaktionstemperatur beibehalten wurde. Die Pumpen wurden mit 235 g entionisiertem Wasser gespült. Nach dem Ende beider Zulaufströme wurde noch 25 Minuten bei der Reaktionstemperatur nachreagieren gelassen. Danach wurde die Reaktionsmischung auf Raumtemperatur abgekühlt und über ein Filter mit einer Maschengröße von 160 µm filtriert.

Die Charakterisierung des erhaltenen Copolymers hinsichtlich Feststoffgehalt (FG) und durchschnittlicher Teilchengröße (D) ist nachstehend angegeben:
FG = 37%
D = 185 nm
Tg= 30°C

### Anwendungsbeispiele (Grafiken siehe Anhang)

### Testmethode

Ein 1,0 %iger Stoff (d.h. das zerschlagene Papier in Wasser (Nullversuch) bzw. in dem jeweiligen unten aufgeführten System) wurde entweder aus 100 % Esprit Paper (das zwei Kleberetiketten enthält) bzw. einem gebleichtem Kurzfasernzellstoff mit Barcode-Etiketten vorbereitet. Diese Stoffmischungen wurden für zwei Minuten in einem Mixer bei Raumtemperatur (ca. 18 °C) aufgeschlagen.

Die folgende Methode wurde für die Evaluierung der Produkte angewandt:
200 ml Probe des Stoffes wurde in einem 400 ml Becherglas bei 500 Upm⁻¹ für 30 Sekunden gerührt. Zur Anfärbung der Stickies wurde zu jedem Ansatz eine definierte Menge von Blue Solvent Farbstoff eingesetzt. Nach definierter Rührdauer, üblicherweise 2 Minuten, wurde der Stoff über ein 541 Filterpapier beim konstanten Vakuum filtriert. Ein weiteres 541 Filterpapier wurde auf dem entstehenden Filterkuchen aufgelegt.

Dieses Filterpapier-Sandwich wurde in einen "Schroeter Dryer" transferiert und für 15 Minuten beim 100 °C an einer separaten Metallplatte getrocknet.

Nach Abkühlung wurde das obere Filterpapier entfernt und die Stickiepartikel mittels eines Flachbett-Scanners ausgewertet (Resolution 600 dpi). Mittels ImageJ Software wurde die Analyse des Bilds durchgeführt (Zählung der übertragenen Stickies). ImageJ ist ein Bildbearbeitungsprogramm, das im öffentliche Java Domain zu finden ist, mit dem Bilder gezeichnet, editiert, analysiert, bearbeitet, gespeichert und gedruckt werden können (Resolution: 8-Bit, 16-Bit und 32-Bit). Die Software kann Fläche und die Anzahl der Stickiepartikeln auswerten.

Das Ergebnis wird als %-Abnahme gegen den Nullversuch angegeben. Die getesteten Produkte wurden im Becher vor der Zugabe des Faserstoffs eingesetzt. System 1 ist ein Polyvinylalkohol, System 2 ist die erfindungsgemäße wässrige Polymerdispersion (wässrige Dispersion enthaltend 5% der Komponente A und 19% der Komponente B, bei der die Komponente A eine Glassübergangtemperatur von 105°C hat), System 3 ist ein Epichlorohydrinbasiertes Fixiermittel und System 4 ist ein Polyester.

### Beispiel 1

| | | Grenze | Anzahl | Abnahme | Gesamtoberfläche | Durchschnittliche Partikelgrösse | Anteil der Oberfläche |
|---|---|---|---|---|---|---|---|
| | | | | [%] | [mm²] | [nm] | [%] |
| A | Nullversuch | 157-225 | 102 | 0 | 2.203 | 0.022 | 0.397 |
| B | 2 kg/t System 1 | 153-225 | 140 | -37.2 | 3.210 | 0.023 | 0.600 |
| C | 2 kg/t System 2 erfindungsgemäß | 164-222 | 93 | 8.8 | 1.681 | 0.018 | 0.307 |
| D | 2 kg/t System 3 | 130-223 | 104 | -2.0 | 1.758 | 0.017 | 0.375 |

| | | | | | | | |
|---|---|---|---|---|---|---|---|
| Grenze: Grenzwert bei der Stickiesanzahl, wie vom Software ImageJ angegeben (ohne Einheit) Anzahl: Anzahl der Stickies auf der Filterpapierprobe (ohne Einheit) Abnahme %: Abnahme (gegen Nullversuch bzw. unbehandeltes Filterpapier) der Stickiesanzahl, als Prozentwert (%) ausgedrückt Gesamtoberfläche: Gesamtoberfläche der Filterpapierprobe, belegt durch Stickiespartikeln (in mm²) Durchschnittliche Partikelgrösse: Durchschnittliche Partikelgrösse (in nm) der Stickies Anteil der Oberfläche (%): Anteil der im Test angewandten Filterpapierprobe, der von Stickies belegt ist, als Prozentwert (%) ausgedrückt | | | | | | | |

### Beispiel 2

Für Beispiel 2 wurde die gleiche Testmethode wie im Beispiel 1 zugrunde gelegt. Als Stickiesquelle wurden Barcode-Etiketten eingesetzt.

| | | Grenze | Anzahl | Abnahme | Gesamtoberfläche | Durchschnittliche Partikelgrösse | Anteil der Oberfläche |
|---|---|---|---|---|---|---|---|
| | | | | [%] | [mm²] | [nm] | [%] |
| A | Nullversuch | 118-213 | 114 | 0 | 8.575 | 0.075 | 1.459 |
| B | 2 kg/t System 1 | 110-209 | 106 | 7.0 | 11.284 | 0.106 | 1.954 |
| C | 2 kg/t System 2 erfindungsgemäß | 134-208 | 57 | 50.0 | 3.840 | 0.067 | 0.671 |
| D | 2 kg/t System 3 | 93-201 | 112 | 1.7 | 15.145 | 0.135 | 2.723 |

### Beispiel 3

Klebeetiketten wurden als die Quelle der Stickies eingesetzt.

| | | Grenze | Anzahl | Abnahme | Gesamtoberfläche | Durchschnittliche Partikelgrösse | Anteil der Oberfläche |
|---|---|---|---|---|---|---|---|
| | | | | [%] | [mm²] | [nm] | [%] |
| A | Nullversuch | 0-206 | 835 | 0 | 16.6 | 0.02 | 1.600 |
| B | 1 kg/t System 2 erfindungsgemäß | 0-205 | 359 | 57.0 | 6.4 | 0.02 | 0.800 |
| C | 2 kg/t System 4 | 0-207 | 438 | 47.5 | 7.72 | 0.02 | 0.900 |
| D | 10 kg/t Talk | 0-194 | 557 | 33.3 | 9.24 | 0.02 | 1.100 |
| E | 10 kg/t Bentonit | 0-201 | 600 | 28.1 | 10.32 | 0.02 | 1.200 |

### Beispiel 4

Klebeetiketten wurden als die Quelle der Stickies eingesetzt. System 2 erfindungsgemäß wurde mit einem Latex mit niedriger Tg (Tg < 40°C, System 9) verglichen.

| | | Grenze | Anzahl | Abnahme | Gesamtoberfläche | Durchschnittliche Partikelgrösse | Anteil der Oberfläche |
|---|---|---|---|---|---|---|---|
| | | | | [%] | [mm²] | [nm] | [%] |
| A | Nullversuch | 0-202 | 499 | 0 | 10.24 | 0.0210 | 1.54 |
| B | 2 kg/t System 2 erfindungsgemäß | 0-205 | 200 | 59.9 | 5.40 | 0.0183 | 0.750 |
| C | 2 kg/t System 6 | 0-199 | 259 | 48.1 | 5.91 | 0.0185 | 0.800 |
| D | 2 kg/t System 7 | 0-201 | 59 | 88.2 | 3.94 | 0.0179 | 0.510 |
| E | 2 kg/t System 8 | 0-209 | 80 | 84.0 | 4.23 | 0.0183 | 0.610 |
| F | 2 kg/t System 9 | 0-195 | 510 | keine | 10.30 | 0.0203 | 1.580 |

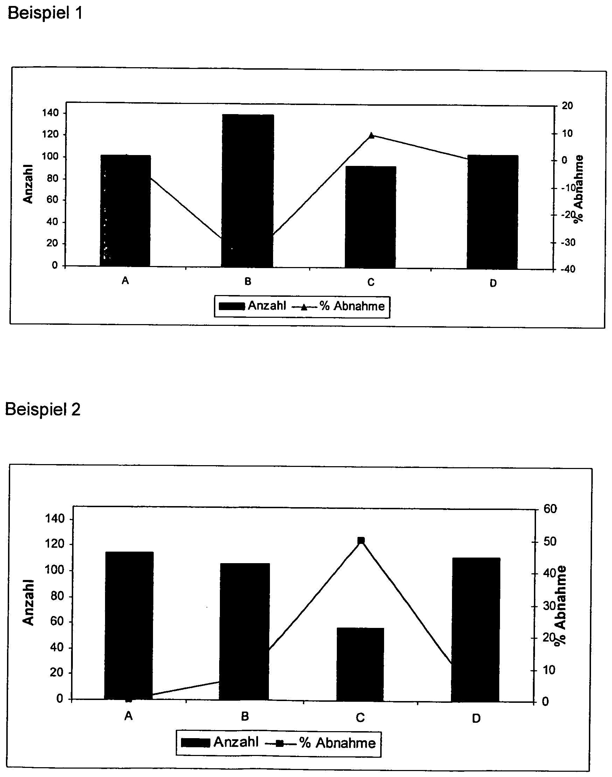

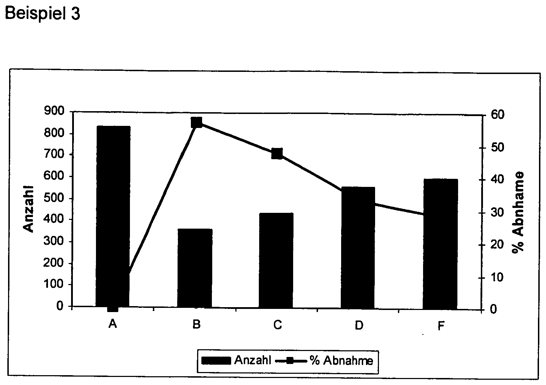

## Patentansprüche

1. Verfahren zur Verringerung der negativen Auswirkungen klebriger Verunreinigungen bei der Verarbeitung von Altpapier **dadurch gekennzeichnet, dass** man bei der Verarbeitung von Altpapier eine wässrige Polymerdispersion enthaltend eine Komponente A und eine Komponente B zur Koagulierung und Entklebung der Stickies zugibt,
wobei Komponente A ein Homopolymer der folgenden Gruppe von
Acrylsäure oder deren Alkylestern, oder Methacrylsäure oder deren Alkylestern, Styrol oder Methylstyrol, Vinylacetat, Itaconcsäure, Glycidylmethacrylat, 2-Hydroxy-alkyl-(meth)acrylat, Methacrylamid, N-hydroxy-ethyl-(meth)acrylamid, Dimethacrylat Monomere, 1 ,3 Butylenglycoldimethacrylat, Ethylenglycol-dimethacrylat, Di-ethylenglycol-dimethacrylat, Propylenglycol-dimethacrylat, Di-propylenglycol-dimethacrylat, 4-Methyl-1 ,4 - pentandiol-dimethacrylat, Divinylbenzol oder Trivinylbenzol und/ oder
ein Copolymer von der Gruppe der oben genannten Monomeren ist und
Komponente B ein Styrolcopolymer mit Acrylsäure, Maleinimid und/oder Maleinsäureanhydrid ist.

2. Verfahren nach Anspruch 1, **dadurch gekennzeichnet, dass** die Komponente A eine Glasübergangstemperatur > 40°C besitzt.

3. Verfahren nach mindestens einem der vorhergehenden Ansprüche, **dadurch gekennzeichnet, dass** die Komponente B ein Molekulargewicht im Bereich von 3.000 bis 15.000 g/mol, vorzugsweise 3.000 bis 7.000 g/mol, besitzt.

4. Verfahren nach mindestens einem der vorhergehenden Ansprüche, **dadurch gekennzeichnet, dass** die wässrige Polymerdispersion noch eine Komponente C, ein kationisches Fixiermittel, enthält, die die Koagulation der Stickies unterstützt.

5. Verfahren nach Anspruch 4, **dadurch gekennzeichnet, dass** die Komponente C ausgewählt wird aus der Gruppe: Polyethylenimin (PEI), Polydiallyldimethyl-ammoniumchlorid (Poly-DADMAC), Polyvinylamin (PVAm), Polyaluminiumchlorid (PAC), Polyacrylamid (PAAM) und Polyamin.

6. Verfahren nach mindestens einem der vorhergehenden Ansprüche, **dadurch gekennzeichnet, dass** die wässrige Polymerdispersion noch eine Komponente D in Form eines Tensids enthält.

7. Verfahren nach mindestens einem der vorhergehenden Ansprüche, **dadurch gekennzeichnet, dass** der Wasseranteil der wässrigen Polymerdispersion 93 bis 17,7%, vorzugsweise 80 bis 45 Gew. % beträgt.

8. Wässrige Polymerdispersion zur Koagulierung und Entklebung von Stickies bei der Verarbeitung von Altpapier enthaltend eine Komponente A, ausgewählt aus einem Homopolymer der folgenden Gruppe: Acrylsäure oder deren Alkylestern, oder Methacrylsäure oder deren Alkylestern, Styrol und/oder Methylstyrol, Vinylacetat, Itaconicsäure, Glycidylmethacrylat, 2- Hydroxy-alkyl-(meth)acrylat, Methacrylamid, N-hydroxy-ethyl-(meth)acrylamid, Dimethacrylat Monomere, 1 ,3 Butylenglycol-dimethacrylat, Ethylenglycoldimethacrylat, Di-ethylenglycol-dimethacrylat, Propylenglycol-dimethacrylat, Dipropylenglycol-dimethacrylat, 4-Methyl-1 ,4 -pentandiol-dimethacrylat, Divinylbenzol und/oder Trivinylbenzol, und/ oder ein Copolymer von der Gruppe der oben genannten Monomeren ist und Komponente B, die ein Styrolcopolymer mit Acrylsäure, Maleinimid und/oder Maleinsäureanhydrid ist.

9. Wässrige Polymerdispersion nach Anspruch 8, **dadurch gekennzeichnet, dass** die Dispersion eine weitere Komponente C ausgewählt aus der Gruppe: Polyethylenimin (PEI), Polydiallyldimethyl-ammoniumchlorid (Poly-DADMAC), Polyvinylamin (PVAm), Polyaluminiumchlorid (PAC), Polyacrylamid (PAAM) und Polyamin enthält.

10. Wässrige Polymerdispersion nach Anspruch 8 und/ oder 9, **dadurch gekennzeichnet, dass** die Dispersion eine weitere Komponente D in Form eines Tensids enthält.

11. Wässrige Polymerdispersion nach mindesten einem der Ansprüche 8 bis 10, **dadurch gekennzeichnet, dass** diese
2 bis 50%, vorzugsweise 5 bis 30% der Komponente A,
2 bis 30%, vorzugsweise 5 bis 25% der Komponente B
0 bis 2% der Komponente C;
0 bis 0,3%, vorzugsweise 0 bis 0,2% der Komponente D und
96 bis 17,7%, vorzugsweise 90 bis 45 % Wasser (Komponente E) enthält.

12. Verwendung einer wässrigen Polymerdispersion enthaltend eine Komponente A und eine Komponente B, wobei die Komponente A ein Homopolymer von Methylmetacrylat, Acrylat oder Styrol oder ein Copolymer von der Gruppe der zuvor genannten Monomeren ist, und die Komponente B ein Styrolcopolymer mit Acrylsäure, Maleimid und/oder Maleinsäureanhydrid ist, zur Koagulierung und Entklebung der Stickies bei der Verarbeitung von Altpapier.

13. Verwendung nach Anspruch 12, wobei die Polymerdispersion zusätzlich noch eine Komponente C, ein kationisches Fixiermittel, enthält.

## Claims

1. A process for reducing the negative effects of sticky contaminants in the processing of waste paper, which comprises adding an aqueous polymer dispersion comprising a component A and a component B for coagulating and detackifying the stickies during the processing of waste paper,
wherein component A is a homopolymer of the following group of
acrylic acid or alkyl esters thereof, or methacrylic acid or alkyl esters thereof, styrene or methyl styrene, vinyl acetate, itaconic acid, glycidyl methacrylate, 2-hydroxy-alkyl (meth)acrylate, methacrylamide, N-hydroxy-ethyl (meth)acrylamide, dimethacrylate monomers, 1,3-butylene-glycol-dimethacrylate, ethylene glycol dimethacrylate, di-ethylene-glycol-dimethacrylate, propylene glycol dimethacrylate, di-propylene-glycol-dimethacrylate, 4-methyl-1,4-pentanediol dimethacrylate, divinylbenzene or trivinylbenzene and/or
is a copolymer from the group of the above-mentioned monomers and
component B is a styrene copolymer with acrylic acid, maleimide and/or maleic anhydride.

2. Process according to claim 1, **characterized in that** component A has a glass transition temperature > 40 °C.

3. Process according to at least one of the preceding claims, **characterized in that** component B has a molecular weight in the range from 3,000 to 15,000 g/mol, preferably 3,000 to 7,000 g/mol.

4. Process according to at least one of the preceding claims, **characterized in that** the aqueous polymer dispersion also comprises a component C, a cationic fixing agent, which supports the coagulation of the stickies.

5. Process according to claim 4, **characterized in that** component C is selected from the group: polyethyleneimine (PEI), polydiallyldimethylammonium chloride (Poly-DADMAC), polyvinylamine (PVAm), polyaluminium chloride (PAC), polyacrylamide (PAAM) and polyamine.

6. Process according to at least one of the preceding claims, **characterized in that** the aqueous polymer dispersion also contains a component D in the form of a surfactant.

7. Process according to at least one of the preceding claims, **characterized in that** the water content of the aqueous polymer dispersion is 93 to 17.7%, preferably 80 to 45% by weight.

8. Aqueous polymer dispersion for coagulating and detackifying stickies in the processing of waste paper, comprising a component A selected from a homopolymer of the following group: acrylic acid or alkyl esters thereof, or methacrylic acid or alkyl esters thereof, styrene and/or methyl styrene, vinyl acetate, itaconic acid, glycidyl methacrylate, 2-hydroxy-alkyl(meth)acrylate, methacrylamide, N-hydroxy-ethyl-(meth)acrylamide, dimethacrylate monomers, 1,3-butylene-glycol-dimethacrylate, ethylene-glycol-dimethacrylate, di-ethylene glycol dimethacrylate, propylene glycol dimethacrylate, dipropylene glycol dimethacrylate, 4-methyl-1,4-pentanediol dimethacrylate, divinylbenzene and/or trivinylbenzene,
and/or a copolymer from the group of monomers mentioned above
and component B which is a styrene copolymer with acrylic acid, maleimide and/or maleic anhydride.

9. Aqueous polymer dispersion according to claim 8, **characterized in that** the dispersion comprises a further component C selected from the group: polyethyleneimine (PEI), polydiallyldimethylammonium chloride (Poly-DADMAC), polyvinylamine (PVAm), polyaluminium chloride (PAC), polyacrylamide (PAAM) and polyamine.

10. Aqueous polymer dispersion according to claim 8 and/or 9, **characterized in that** the dispersion comprises a further component D in the form of a surfactant.

11. Aqueous polymer dispersion according to at least one of claims 8 to 10, **characterized in that** the dispersion comprises
2 to 50%, preferably 5 to 30% of component A,
2 to 30%, preferably 5 to 25% of component B,
0 to 2% of component C,
0 to 0.3%, preferably 0 to 0.2% of component D, and
96 to 17.7%, preferably 90 to 45% water (component E).

12. Use of an aqueous polymer dispersion comprising a component A and a component B, wherein component A is a homopolymer of methyl methacrylate, acrylate or styrene or a copolymer of the group of the above-mentioned monomers, and component B is a styrene copolymer with acrylic acid, maleimide and/or maleic anhydride, for coagulating and detackifying the stickies in the processing of waste paper.

13. Use according to claim 12, wherein the polymer dispersion additionally comprises a component C, a cationic fixing agent.

## Revendications

1. Procédé de réduction d'impuretés poisseuses à effets négatifs lors de la transformation de vieux papiers, **caractérisé en ce que** l'on ajoute au cours de la transformation des vieux papiers une dispersion aqueuse de polymère contenant un composant A et un composant B pour la coagulation et la dénaturation des éléments collants,
dans lequel le composant A est un homopolymère du groupe suivant formé par
l'acide acrylique ou ses esters d'alkyle, ou l'acide méthacrylique ou ses esters d'alkyle, le styrène ou le méthylstyrène, l'acétate de vinyle, l'acide itaconique, le méthacrylate de glycidyle, le méthacrylate de 2-hydroxyalkyle, le méthacrylamide, le N-hydroxyéthylméthacrylamide, les monomères de diméthacrylate, le diméthacrylate de butylène-1,3 glycol, le diméthacrylate d'éthylène glycol, le diméthacrylate de diéthylène glycol, le diméthacrylate de propylène glycol, le diméthacrylate de dipropylène glycol, le diméthacrylate de 4-méthylpentane-1,4-diol, le divinylbenzène ou le trivinylbenzène et/ou
un copolymère du groupe des monomères susmentionnés et
le composant B est un copolymère de styrène avec de l'acide acrylique, du maléinimide et/ou de l'anhydride d'acide maléique.

2. Procédé selon la revendication 1, **caractérisé en ce que** le composant A possède une température de transition vitreuse > 40°C.

3. Procédé selon au moins l'une des revendications précédentes, **caractérisé en ce que** le composant B possède un poids moléculaire dans la plage de 3000 à 15 000 g/mol, de préférence de 3000 à 7000 g/mol.

4. Procédé selon au moins l'une des revendications précédentes, **caractérisé en ce que** la dispersion aqueuse de polymère contient encore un composant C, un agent fixateur cationique, qui favorise la coagulation des éléments collants.

5. Procédé selon la revendication 4, **caractérisé en ce que** le composant C est choisi dans le groupe : polyéthylèneimine (PEI), polychlorure de diallyldiméthylammonium (poly-DADMAC), polyvinylamine (PVAm), polychlorure d'aluminium (PAC), polyacrylamide (PAAM) et polyamine.

6. Procédé selon au moins l'une des revendications précédentes, **caractérisé en ce que** la dispersion aqueuse de polymère contient encore un composant D sous la forme d'un tensioactif.

7. Procédé selon au moins l'une des revendications précédentes, **caractérisé en ce que** la proportion d'eau de la dispersion aqueuse de polymère est de 93 à 17,7 %, de préférence 80 à 45 % en poids.

8. Dispersion aqueuse de polymère pour la coagulation et la dénaturation des éléments collants lors de la transformation des vieux papiers contenant un composant A, choisi parmi un homopolymère du groupe suivant : l'acide acrylique ou ses esters d'alkyle, ou l'acide méthacrylique ou ses esters d'alkyle, le styrène et/ou le méthylstyrène, l'acétate de vinyle, l'acide itaconique, le méthacrylate de glycidyle, le méthacrylate de 2-hydroxyalkyle, le méthacrylamide, le N-hydroxyéthylméthacrylamide, les monomères de diméthacrylate, le diméthacrylate de butylène-1,3 glycol, le diméthacrylate d'éthylène glycol, le diméthacrylate de diéthylène glycol, le diméthacrylate de propylène glycol, le diméthacrylate de dipropylène glycol, le diméthacrylate de 4-méthylpentane-1,4-diol, le divinylbenzène et/ou le trivinylbenzène,
et/ou un copolymère du groupe des monomères susmentionnés
et le composant B, qui est un copolymère de styrène avec de l'acide acrylique, du maléinimide et/ou de l'anhydride d'acide maléique.

9. Dispersion aqueuse de polymère selon la revendication 8, **caractérisée en ce que** la dispersion comprend un autre composant C choisi dans le groupe : polyéthylèneimine (PEI), polychlorure de diallyldiméthylammonium (poly-DADMAC), polyvinylamine (PVAm), polychlorure d'aluminium (PAC), polyacrylamide (PAAM) et polyamine.

10. Dispersion aqueuse de polymère selon la revendication 8 et/ou 9, **caractérisée en ce que** la dispersion comprend un autre composant D sous la forme d'un tensioactif.

11. Dispersion aqueuse de polymère selon au moins l'une des revendications 8 à 10, **caractérisée en ce que** celle-ci contient
2 à 50 %, de préférence 5 à 30 % de composant A,
2 à 30 %, de préférence 5 à 25 % de composant B
0 à 2 % de composant C ;
0 à 0,3 %, de préférence 0 à 0,2 % de composant D et
96 à 17,7 %, de préférence 90 à 45 % d'eau (composant E).

12. Utilisation d'une dispersion aqueuse de polymère contenant un composant A et un composant B, le composant A étant un homopolymère de méthacrylate de méthyle, d'acrylate ou de styrène ou un copolymère du groupe des monomères précités, et le composant B étant un copolymère de styrène avec l'acide acrylique, le maléimide et/ou l'anhydride d'acide maléique, pour la coagulation et la dénaturation des éléments collants lors de la transformation de vieux papiers.

13. Utilisation selon la revendication 12, dans laquelle la dispersion de polymère comprend en outre encore un composant C, un agent fixateur cationique.
